# EUROPEAN PATENT SPECIFICATION

(11) **EP 1 832 853 B1**
(45) Date of publication and mention of the grant of the patent: **03.05.2017**
(21) Application number: 07004604.0
(22) Date of filing: 06.03.2007
(51) Int. Cl.: G01D 5/22, G01B 3/18

(54) **Absolute position measuring device**
Vorrichtung zum Messen der Absolutposition
Dispositif de mesure de position absolue

(30) Priority: 07.03.2006 JP 2006061478; 07.02.2007 JP 2007028360
(43) Date of publication of application: 12.09.2007
(73) Proprietor: Mitutoyo Corporation, Kawasaki-shi, Kanagawa 213-8533 (JP)
(72) Inventor: Sasaki, Kouji, Kawasaki-shi Kanagawa 213-8533 (JP)
(74) Representative: Grünecker Patent- und Rechtsanwälte PartG mbB

(56) References cited:
- EP-A1- 1 515 112
- EP-A2- 1 327 862
- CH-A5- 676 874

## Description

### BACKGROUND OF THE INVENTION

### 1. FIELD OF THE INVENTION

The present invention relates to an absolute position measuring device.

For example, the present invention relates to an absolute position measuring device of an absolute type for measuring a position of a spindle in a micrometer head, a micrometer, a hole test, or the like.

### 2. DESCRIPTION OF RELATED ART

Up to now, in small-sized measuring equipment for measuring a length, a size, an angle, or the like, such as a micrometer or a micrometer head, information on an amount of relative movement of a movable member with respect to a fixed member is detected to measure an object to be measured. US6772087 (FIG. 1, for example) discloses, as an example, a configuration in which the amount of relative movement of the movable member with respect to the fixed member is detected.

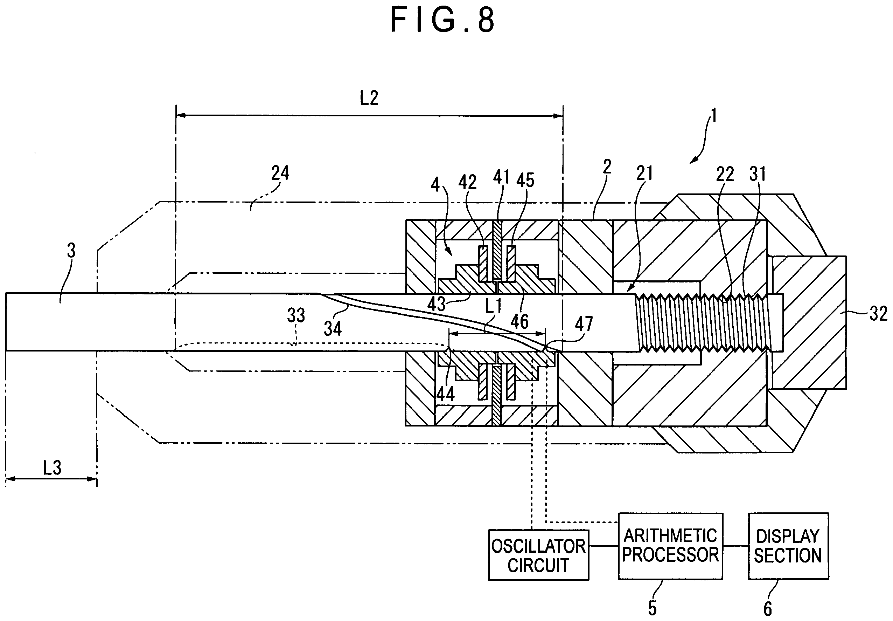

FIG. 8 is a diagram showing an embodiment of a micrometer head disclosed in the aforesaid document.

A micrometer head 1 according to this embodiment includes a main body 2 having an internal thread 22 in an inner periphery of a through-hole 21, a spindle 3 that functions as a movable member having a feed screw 31 which is inserted into the through-hole 21 of the main body 2 and screwed with the internal thread 22, a phase signal transmission section 4 for outputting two phase signals that are different in period according to the movement of the spindle 3, an arithmetic processor 5 for calculating the absolute position of the spindle 3 on the basis of an output signal from the phase signal transmission section 4, and a display section 6 for displaying the absolute position of the spindle 3 which is calculated by the arithmetic processor 5.

The spindle 3 is movable forward and backward, and a knob 32 is disposed at a rear end of the spindle 3. When the spindle 3 is rotationally operated with respect to the main body 2 with the knob 32, the internal thread 22 and the feed screw 31 are screwed with each other to move the spindle 3 forward and backward in the axial direction. The spindle 3 has two key grooves 33 and 34, the first key groove 33 is defined linearly in parallel to the axis of the spindle 3, and the second key groove 34 is defined spirally with respect to the spindle 3.

The phase signal transmission section 4 is constituted by two pairs of rotary encoders, and includes one stator 41 that is fixed to the main body 2, and two rotors 42 and 45 which are disposed on both sides of the stator 41 so as to interpose the stator 41 therebetween.

Each of the stator 41 and the rotors 42 and 45 has an opening through which the spindle 3 passes. The two rotors 42 and 45 are disposed outside of rotary cylinders 43 and 46 that are independently rotatable with respect to the spindle 3, respectively. Keys 44 and 47 that are engaged with the key grooves 33 and 34 of the spindle 3, respectively, are disposed on the inner peripheries of the rotary cylinders 43 and 46, respectively. In this example, the first rotor 42 is disposed on the first rotary cylinder 43, and the key 44 of the first rotary cylinder 43 is engaged with the first key groove 33. The second rotor 45 is disposed on the second rotary cylinder 46, and the key 47 of the second rotary cylinder 46 is engaged with the second key groove 34.

Also, coil springs (not shown) are disposed between the two rotary cylinders 43 and 46 and the inner wall of the main body 2, respectively, and the two rotors 42 and 45 are urged against the stator 41 by those coils, thereby holding gaps between the stator 41 and the rotors 42 and 45 in a state where the stator 41 comes close to the rotors 42 and 45.

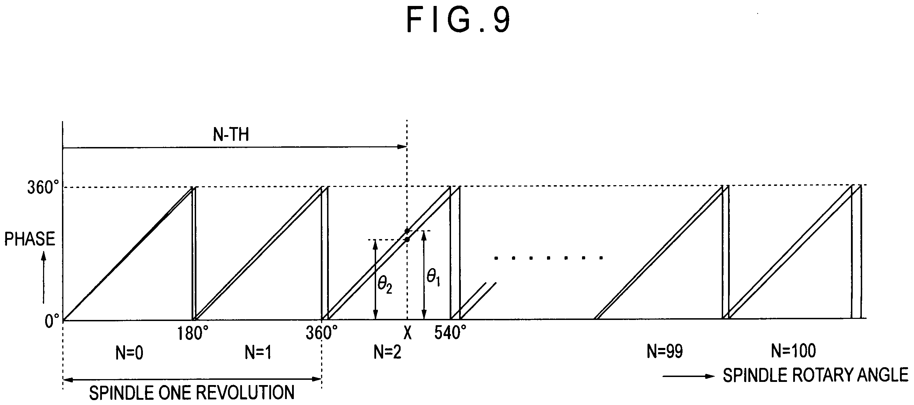

The two key grooves 33 and 34 are disposed in such a manner that a difference between rotation phases which are obtained from the two rotors 42 and 45 are always different in the movable range of the spindle 3. For example, when a phase difference of 100 periods is obtained from the first rotor 42 within the movable range of the spindle 3, a phase difference of 99 periods is obtained from the second rotor 45. FIG. 9 shows an example of a relationship between the rotation speed of the spindle 3 and a phase signal that is obtained from the two rotors 42 and 45.

In the above-mentioned configuration, when the spindle 3 rotates, the spindle 3 is moved forward and backward in the axial direction. At the same time, when the spindle 3 rotates, the keys 44 and 47 of the two rotary cylinders 43 and 46 are engaged with the key grooves 33 and 34 of the spindle 3, respectively. As a result, the respective rotary cylinders 43 and 46 are rotated according to the rotation of the key grooves 33 and 34. Then, the respective rotors 42 and 45 are rotated together with the rotary cylinders 43 and 46. Since a difference between the phase signals that are obtained from the two rotors 42 and 45 is always different in the movable range of the spindle 3, an absolute position of the spindle 3 is contrarily calculated from the phase difference of the two rotors 42 and 45.

In a method of calculating the absolute position of the spindle 3 from the phase difference of the two rotors 42 and 45, the following manner may be applied. That is, a table that stores a relationship between the phase difference of the two rotors 42 and 45 and the absolute position of the spindle 3 is stored in the arithmetic processor 5 in advance, and the absolute position of the spindle 3 is calculated from the phase difference of the rotors 42 and 45. Alternatively, it is possible that the detected phase difference of the two rotors 42 and 45 is divided by the phase difference that is developed by one revolution of the spindle 3 to calculate the rotation speed of the spindle 3, and the calculated rotation speed of the spindle is multiplied by a pitch of the spindle 3 by one revolution to calculate the absolute position of the spindle.

However, in the configuration shown in FIG. 8, since the two rotors 42 and 45 are disposed with the single stator 41 interposed therebetween, the positions of the two keys 44 and 47 that are disposed on the rotary cylinders 43 and 46 in order to rotate the rotors 42 and 45, respectively, are away from each other in the axial direction of the spindle 3 (L1 of FIG. 8).

Since the two key grooves 33 and 34 that can be engaged with the two keys 44 and 47 which are away from each other in the axial direction of the spindle, respectively, must be carved in the spindle 3, the origins of the respective key grooves 33 and 34 are largely displaced. As a result, a range L2 in which the key grooves 33 and 34 are carved is widened in the axial direction of the spindle. Then, in order to prevent such a disadvantage that a dust enters the interior of the micrometer head 1, the spindle 3 must be covered with a frame 24 so as not to expose the key grooves 33 and 34 of the spindle 3 to the external even when the spindle is moved forward and backward. Therefore, a length L3 of the spindle 3 which projects from the frame 24 is shortened as much, with the result that there arises a problem in that the length measurement range is narrowed.

On the other hand, in order to increase the length measurement range, the spindle 3 is covered with the frame 24 so as not to expose the key grooves 33 and 34, and the spindle 3 must be projected long from the frame 24. As a result, there occurs a problem in that the micrometer head 1 is greatly increased in size.

In order to urge the two rotors 42 and 45 against the stator 41, two coil springs (not shown) are required. However, it is difficult to urge the two rotors 42 and 45 by the means of the two coil springs (not shown), respectively, so as to keep the gaps with respect to the stator 41 from both sides of the single stator 41, and there arises a problem in that the assembling work is very complicated.

Also, a spiral key groove must be machined on the spindle so that the rotation periods of the two rotors are different from each other. However, it is very difficult to carve the spiral key groove on the spindle with high precision, and there arises a problem in that the machining costs increase.

### SUMMARY OF THE INVENTION

The present invention has been made to solve the above-mentioned problems, and therefore a main object of the present invention is to provide an absolute position measuring device which is downsized and simple in manufacture.

According to the present invention, there is provided an absolute position measuring device, characterized by including: a main body; a spindle screwed with the main body and movable forward and backward in an axial direction by rotation; a phase signal transmission section for transmitting two phase signals that are different in period from each other according to the rotation of the spindle; and an arithmetic processor for performing an arithmetic operation on the phase signal to obtain an absolute position of the spindle 3, in which: a key groove is defined in the spindle along the axial line; the phase signal transmission section includes: a rotary encoder which includes a key which is engaged with the key groove and a rotor plate which rotates integrally with the spindle in a state where the rotor plate is fitted around the spindle; a rotary cylinder which includes the key which is engaged with the key groove, rotates integrally with the spindle in a state where the rotary cylinder is fitted around the spindle, and includes an external thread on an outer surface; a nut member which is engaged with the external thread of the rotary cylinder in a rotation stop state, and slides with the rotation of the rotary cylinder; and a linear encoder having a slider which slides together with the nut member and a detector for detecting the position of the slider; the rotary encoder absolutely detects a rotation angle of the rotor plate within one revolution; and the linear encoder absolutely detects the position of the slider.

In the above-mentioned configuration, when the spindle rotates, the spindle and the main body are screwed with each other to move the spindle forward and backward with respect to the main body. A phase signal corresponding to the rotation of the spindle is transmitted from the phase signal transmission section according to the rotation of the spindle. When the spindle rotates, since the key of the rotor plate is engaged with the key groove of the spindle, the rotor plate is integrally rotated with the spindle. The rotation of the rotor plate is detected, the phase signal is outputted from the rotary encoder, and the rotation angle within one revolution of the rotor plate is absolutely detected.

Also, when the spindle rotates, since the key of the rotary cylinder is engaged with the key groove of the spindle, the rotary cylinder is rotated integrally with the spindle. When the rotary cylinder rotates, a nut member that is screwed with an external thread of the rotary cylinder is fed to the external thread and slid. Then, the slider is slid together with the nut member.

The position of the slider is detected, the phase signal is outputted from the linear encoder, and the slider position is absolutely detected.

In this example, when a relationship between the slider position and the rotation speed of the spindle is set in advance, the rotation speed of the spindle is unambiguously found from the slider position in the arithmetic processor. Then, the total rotation phase of the spindle is calculated according to the rotation angle within one revolution of the rotor plate and the rotation speed of the spindle. The total amount of movement of the spindle, that is, the absolute position of the spindle is calculated on the basis of the total rotation phase of the spindle and the feed pitch of the spindle.

With the above-mentioned configuration, the absolute position of the spindle can be obtained by the rotary encoder and the linear encoder.

In this situation, coarse information such as the spindle rotation speed is acquired on the basis of the absolute position of the slider, and a high-precision rotation phase within one revolution can be acquired on the basis of the rotation angle of the rotor plate. Accordingly, the absolute position of the spindle can be obtained with high precision.

In this example, in absolute detection of the spindle position with high precision, only the rotor plate of the rotary encoder is rotated together with the spindle, and the rotation speed of the spindle is read by converting the rotation of the spindle into a slide movement and reading the slide movement by the linear encoder. For this reason, in the present invention, the number of key grooves that are carved on the spindle may be one, and the machining is simple.

Up to now, in detection of the absolute position of the spindle, the two rotor plates are rotated in different periods with the rotation of the spindle, and the two key grooves that are different in the pitch are machined on the spindle.

However, it is difficult to conduct machining for carving the two grooves that are different in the pitch on the spindle, and the costs are increased.

In this point, according to the present invention, since the number of grooves that are carved on the spindle may be one, the machining is simple.

Also, in sliding the slider of the linear encoder, the nut member that stops rotation is screwed with the external thread of the rotary cylinder to slide the slider together with the nut member. Since the external thread of the rotary cylinder and the internal thread of the nut can be machined with high precision, it is possible to enhance precision with which the rotation of the spindle is converted into the amount of slide of the slider, and it is possible to improve the detection precision of the spindle position.

Up to now, because the spiral key groove is carved on the spindle, it is difficult to conduct machining, and it is difficult to make the pitch of the spirals high in precision.

In this point, according to the present invention, the external thread of the rotary cylinder and the internal thread of the nut member can be machined with high precision, thereby making it possible to easily improve the detection precision of the spindle position.

Also, up to now, because the two key grooves are carved on the spindle, a region where the key grooves are carved on the spindle is lengthened, and there arises a problem in that the overall measuring device is increased in the size.

In this point, according to the present invention, since the number of key grooves of the spindle may be one, it is possible to shorten the region where the key grooves are carved to downsize the overall measuring device.

According to the present invention, it is preferred that the linear encoder absolutely detects the position of the slider.

With such an arrangement, a rotation speed of the spindle can be calculated with high accuracy based on the absolute position of the slider absolutely detected by the linear encoder. Thus, the absolute position of the spindle can be obtained with high accuracy.

For example, the linear encoder calculates the a rotation speed N (which is, for example, integer: 0, 1, 2, 3, ...) of the spindle which is calculated on the basis of the slider position. Further, the rotation angle of one revolution of the rotor plate is absolutely detected by the rotary encoder. Then, the total rotation phase of the spindle is calculated according to the rotation speed N of the spindle and the rotation angle of the rotor plate.

Incidentally, the rotation speed N of the spindle which is calculated on the basis of the slider position of the linear encoder may be a half-revolution unit of 0.5, 1, 1.5, .... In this case, the rotation angle (0°<θ<180°) of the half rotation of the rotor plate is absolutely detected. Then, the total rotation phase of the spindle is calculated according to the rotation speed N of the spindle and the rotation angle of the rotor plate.

According to the present invention, it is preferred that the linear encoder incrementally detects the position of the slider.

With such an arrangement, a rotation speed of the spindle can be obtained based on the position of the slider incrementally detected by the linear encoder. Also, since the encoder performing incremental detection has simpler structure than the encoder performing absolute detection, the manufacturing process for the absolute position measuring device can be simplified, therefore improving manufacturing efficiency.

Also, up to now, because the two key grooves are carved on the spindle, a region where the key grooves are carved on the spindle is lengthened, and there arises a problem in that the overall measuring device is increased in the size.

In this point, according to the present invention, since the number of key grooves of the spindle may be one, it is possible to shorten the region where the key grooves are carved to downsize the overall measuring device. Then, when the screws of the rotary cylinder and the pitches of cogs in gears are thinned, thereby making it possible to greatly downsize the measuring device of the present invention.

According to the present invention, it is preferable that the rotor plate be supported by the rotary cylinder.

With the above-mentioned configuration, the cylinder that supports the rotation of the rotor plate and the rotary cylinder that is screwed with the nut member are made common, thereby making it possible to reduce the number of parts and downsize the device.

According to the present invention, it is preferable that the pitches of the external thread of the rotary cylinder be thinner than the pitches of the screw of the spindle.

With the above-mentioned configuration, since the movable range of the nut member is thinner than the movable range of the spindle, it is possible to downsize the linear encoder so as to downsize the overall device.

For example, in the case where the spindle rotates 12.5 revolutions at 2 mm pitches per one revolution, the movable range of the spindle is 25 mm.

In this example, when the pitch of the external thread of the rotary cylinder is set to 0.1 mm, the movable range of the nut member is 1.25 mm. Therefore, the linear encoder can be greatly downsized. Then, in the linear encoder, since only rough information such as the rotation speed of the spindle needs to be acquired, even in the case where the linear encoder is downsized, and the resolution is deteriorated, it is possible to detect the spindle position with high precision by detecting the rotation of the rotary encoder.

### BRIEF DESCRIPTION OF THE DRAWINGS

FIG. 1 is a cross-sectional view showing a configuration of a micrometer head as a first embodiment of an absolute position measuring device;
FIG. 2 is a perspective view showing a configuration of a phase signal transmission section according to the first embodiment;
FIG. 3 is a diagram showing a signal that is outputted from a rotary encoder according to the first embodiment;
FIG. 4 is a diagram showing a configuration of a transmission/reception control section and an arithmetic processing section according to the first embodiment;
FIG. 5 is a diagram showing a relationship between a position of a slider and a rotation speed of a spindle;
FIGS. 6A and 6B are diagrams showing facing surfaces of a stator and a rotor according to the first embodiment, respectively;
FIG. 7A is a diagram showing a detection electrode section that conducts electromagnetic coupling in a linear encoder;
FIG. 7B is a diagram showing a coupling electrode section that conducts electromagnetic coupling in the linear encoder;
FIG. 8 is a diagram showing a configuration of a micrometer head in a related art; and
FIG. 9 is a diagram showing an example of a relationship between the rotation speed of a spindle and phase signals that are obtained from two rotors in the related art.

### DETAILED DESCRIPTION OF PREFERRED EMBODIMENT(S)

Hereinafter, a description will be given of embodiments of the present invention with reference to the accompanying drawings.

### (First Embodiment)

An absolute position measuring device according to a first embodiment of the present invention will be described.

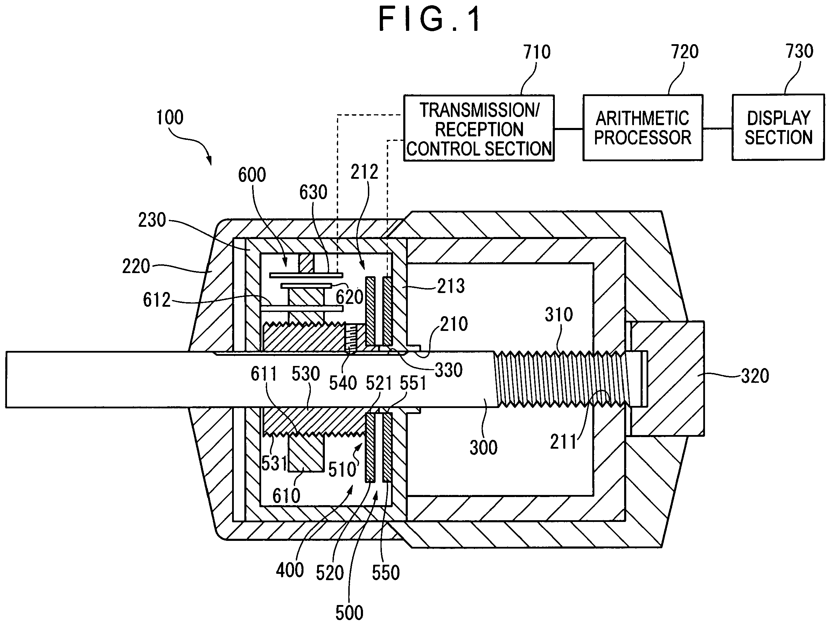

FIG. 1 is a cross-sectional view showing the configuration of a micrometer head 100 as a first embodiment of the absolute position measuring device.

The micrometer head 100 includes a main body 200, a spindle 300 that is screwed with the main body 200 and movable forward and backward in the axial direction by rotation, a phase signal transmission section 400 that transmits a phase signal according to the amount of movement of the spindle 300, a transmission/reception control section 710 that controls the transmission/reception of a signal with respect to the phase signal transmission section 400, an arithmetic processor 720 that performs an arithmetic operation on the phase signal to obtain an absolute position of the spindle 300, and a display section 730 that displays the calculated absolute position of the spindle 300.

The main body 200 is shaped in a cylinder having a through-hole 210, and an internal thread 211 is defined on an inner periphery of the through-hole 210. An inner partition plate 213 that partitions a storage space 212 is disposed within the through-hole 210. Also, the outer periphery of the main body 200 at a front end side thereof is covered with an outer frame 220.

The spindle 300 passes through the through-hole 210 of the main body 200, and both ends of the spindle 300 are projected from the main body 200. A feed screw 310 that is screwed with the internal thread 211 of the main body 200 is disposed on the outer periphery of the rear end side of the spindle 300 so that the spindle 300 is moved forward and backward in the axial direction due to the rotation operation. A knob 320 with which the spindle 300 is rotationally operated from the external of the main body 200 is disposed on the rear end of the spindle 300. A key groove 330 is defined in the center of the spindle 300 linearly along the axial direction.

In this example, the feed screw 310 of the spindle 300 is carved with 12.5 revolutions at a feed of 2 mm. In other words, the movable distance of the spindle 300 is 25 mm.

The phase signal transmission section 400 will be described.

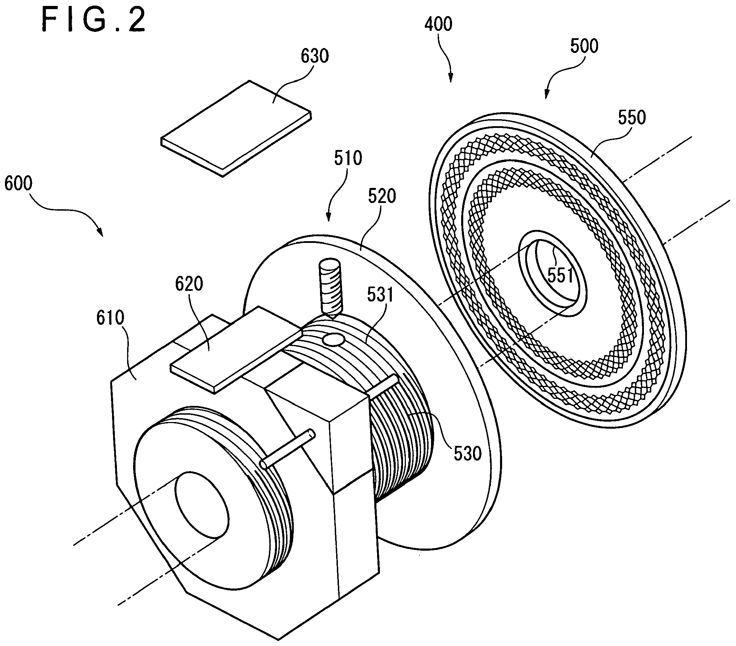

FIG. 2 is a perspective view showing the configuration of the phase signal transmission section 400.

The phase signal transmission section 400 includes a rotary encoder 500 having a rotor 510 that is fitted around the spindle 300 and rotates together with the spindle 300, and a linear encoder 600 having a slider 620 that slides with the rotation of the rotor 510.

The rotary encoder 500 is an in-one-revolution ABS (absolution) type rotary encoder which is capable of detecting the absolute angle of rotation of the rotor 510 within one revolution.

The linear encoder 600 is an absolution type rotary encoder which is capable of detecting the absolute position of the slider 620.

The rotary encoder 500 includes a rotor 510 that rotates integrally with the spindle 300, and a stator 550 that detects the rotation of the rotor 510.

In FIG. 2, for facilitation of viewing, the gap between the rotor 510 and the stator 550 is widely drawn.

The rotor 510 includes a rotor plate 520 that is paired with the stator 550 and rotates in a state where the rotor 510 faces the stator 550, a rotary cylinder 530 that is centered on the spindle 300 and supports the rotation of the rotor plate 520, and a key 540 that is engaged with the key groove 330 of the spindle 300.

The rotor plate 520 is a small disc having a through-hole 521 through which the spindle 300 passes. The rotary cylinder 530 is shaped in a cylinder that is fitted around the spindle 300, is connected to a back surface of the rotor plate 520, and supports the rotation of the rotor plate 520. The key 540 is screwed into the rotary cylinder 530, and a leading end of the key 540 is engaged with the key groove 330 of the spindle 300. Then, an external thread 531 is defined on the outer periphery of the rotary cylinder 530. The external thread 531 has a fine pitch, for example, 0.1 mm pitch. In this example, when the spindle 300 rotates, since the key 540 is engaged with the key groove 330 of the spindle 300, the rotary cylinder 530 rotates integrally with the spindle 300.

The rotary cylinder 530 is interposed between the inner partition plate 213 and a front end plate 230 of the main body 200 in such a manner that the movement of the rotary cylinder 530 in the axial direction is regulated by the front end plate 230 and the inner partition plate 213.

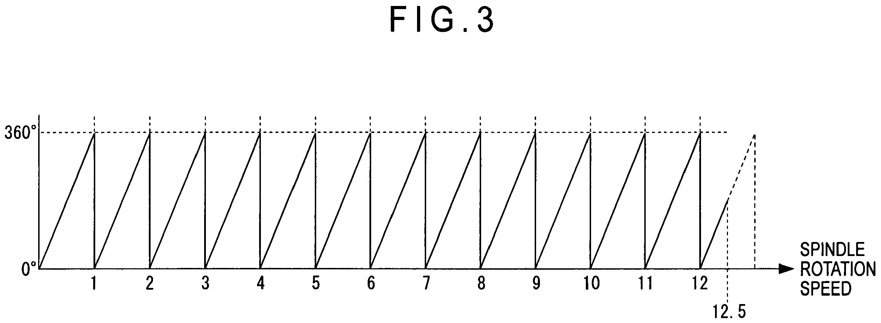

The stator 550 has a through-hole 551 into which the spindle 300 passes in the center of the disc, and is fixed to the inner partition plate 213. The stator 550 is disposed opposite to the rotor 510, and detects the absolute angle of rotation of the rotor 510 within one revolution. In other words, the stator 550 outputs a phase signal indicative of a change in one period, that is, one revolution of the rotor 510. Then, since the rotor 510 rotates together with the spindle 300, the phase signal that is outputted from the stator 550 indicates a change of one period by one revolution of the spindle 300, and indicates the change of 12.5 periods during the 12.5 revolutions of the spindle 300, as shown in FIG. 3.

The linear encoder 600 includes a nut member 610 that is screwed with the external thread 531 of the rotary cylinder 530 and slides, a slider 620 that is attached to the nut member 610 and slides integrally with the nut member 610, and a detection scale (detector) 630 that outputs a phase signal corresponding to the position of the slider 620.

The nut member 610 has an internal thread 611 that is engaged with the rotary cylinder 530, and is engaged with the rotary cylinder 530. A guide pin 612 for rotation stop is inserted into the nut member 610. Since the rotation of the nut member 610 is stopped by the guide pin 612, the nut member 610 slides when the rotary cylinder 530 rotates.

The slider 620 is attached onto the nut member 610, and moves together with the nut member 610.

In this example, in order to narrow the movable range of the slider 620, it is preferable that the external thread 531 of the rotary cylinder 530 is formed as minute as possible, and it is preferable that the external thread 531 of the rotary cylinder 530 is at least minuter than the feed screw 310 of the spindle 300.

For example, when the feed screw 310 of the spindle 300 has 2-mm pitch, the external thread 531 of the rotary cylinder 530 is set to have 0.1 mm pitch. As a result, the spindle 300 moves 25 mm with 12. 5 revolutions at maximum whereas the movable range of the nut member 610 and the slider 620 is 1.25 mm. The detection scale 630 is fixed to the main body 200 opposite to the slider 620. Then, the detection scale 630 outputs the phase signals having different values to the slider 620 in different positions. Accordingly, the absolute position of the slider 620 can be calculated on the basis of the phase signal.

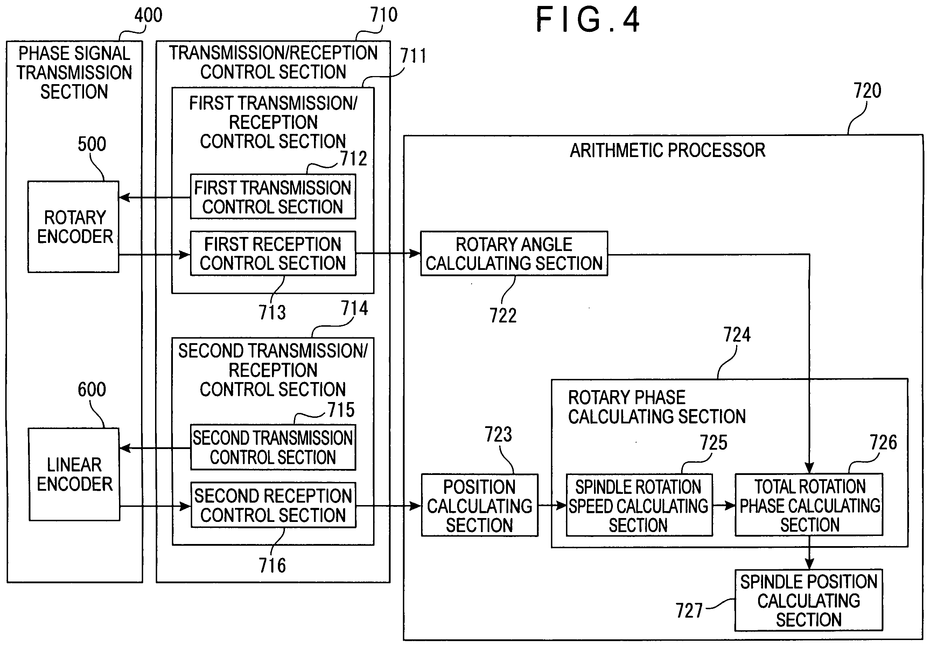

FIG. 4 is a diagram showing the configuration of the transmission/reception control section 710 and the arithmetic processor 720.

The transmission/reception control section 710 includes a first transmission/reception control section 711 that controls the transmission/reception of the signal with respect to the stator 550, and a second transmission/reception control section 714 that controls the transmission/reception of the signal with respect to the detection scale 630.

The first transmission/reception control section 711 includes a first transmission control section 712 and a first reception control section 713. The first transmission control section 712 transmits a given AC signal to the stator 550, and the first reception control section 713 receives the signal from the stator 550.

Likewise, the second transmission/reception control section 714 includes a second transmission control section 715 and a second reception control section 716. The second transmission control section 715 transmits a given AC signal to the detection scale 630, and the second reception control section 716 receives the signal from the detection scale 630. The first reception control section 713 and the second reception control section 716 outputs the phase signals that are received from the stator 550 and the detection scale 630 to the arithmetic processor 720.

The arithmetic processor 720 will be described.

The arithmetic processor 720 includes a rotation angle calculating section 722 that calculates the rotation angle θ of the rotor 510, a position calculating section 723 that calculates the absolute position of the slider 620, a rotation phase calculating section 724 that calculates the rotation phase of the spindle 300 on the basis of the rotation angle of the rotor 510 and the position of the slider 620, and a spindle position calculating section 727 that calculates the absolute position of the spindle 300 on the basis of the rotation phase of the spindle 300.

The rotation angle calculating section 722 calculates the rotation angle of the rotor 510 on the basis of the signal from the first reception control section 713. The rotation angle calculating section 722 calculates the absolute angle (0°<θ<360°) of rotation of the rotor 510 within one revolution on the basis of the output signal (refer to FIG. 3) from the first reception control section 713. The first rotation angle calculating section 722 has a relationship between the rotation angle of the rotor 510 and the phase signal set and stored therein.

As shown in FIG. 3, since the phase signal that is outputted from the reception control section 713 is different in phase within one revolution of the rotor 510, the absolute angle of rotation of the rotor 510 within one revolution is calculated on the basis of the phase signal.

Since the rotor 510 rotates integrally with the spindle 300, the rotation angle of the rotor 510 within one revolution is identical with the rotation angle of the spindle 300 within one revolution.

A relationship between the signal from the second reception control section 716 and the absolute position of the slider 620 is set in the position calculating section 723. The position calculating section 723 calculates the absolute position of the slider 620 on the basis of the signal from the second reception control section 716.

The rotation phase calculating section 724 includes a spindle rotation speed calculating section 725 that calculates the rotation speed of the spindle 300 on the basis of the absolute position of the slider 620, and a total rotation phase calculating section 726 that calculates the total rotation phase of the spindle 300 on the basis of the rotation speed of the spindle and the rotation angle of the rotor 510.

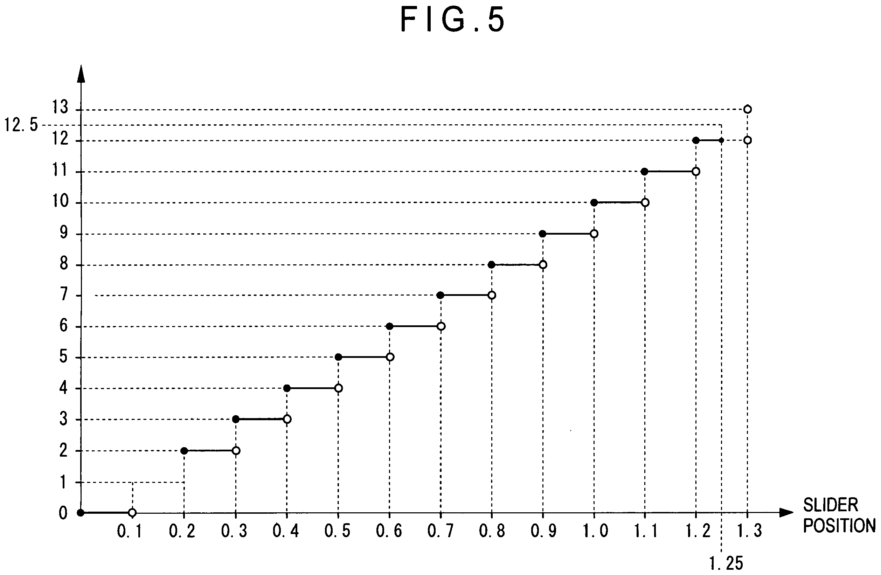

A relationship between the absolute position of the slider 620 and the rotation speed of the spindle is set in the spindle rotation speed calculating section 725. Since the slider 620 is displaced 0.1 mm per one revolution of the spindle 300, for example, as shown in FIG. 5, a correlation that makes the displacement of 0.1 mm of the slider 620 correspond to one revolution of the spindle 300 is set in the spindle rotation speed calculating section 725.

The rotation speed N of the spindle 300 is specified according to the slider position.

In calculating the total rotation phase of the spindle 300, the total rotation phase calculating section 726 first calculates a phase θ2 (= 360° x N) of the spindle rotation speed N on the basis of the spindle rotation speed N. Subsequently, the total rotation phase calculating section 726 adds the rotation angle θ1 of the rotor 510 which is calculated by the rotation angle calculating section 722 to the phase θ2 of the spindle rotation speed which is calculated in the above. As a result, the total rotation phase θT (= θ₁ + θ₂) of the spindle 300 is calculated.

The movement pitch (2 mm) of the spindle 300 per one revolution is set in advance. Then, in the spindle position calculating section 727, the movement pitch (2 mm) and the total rotation phase θT are multiplied by each other, to thereby calculate the total amount of movement of the spindle, that is, the absolute position of the spindle 300.

The display section 730 displays the absolute position of the spindle 300, for example, by digital display.

Now, a description will be given briefly of the principle of detecting the rotation angle of the rotor 510 within one revolution by the stator 550 in the rotary encoder 500 of the phase signal transmission section 400.

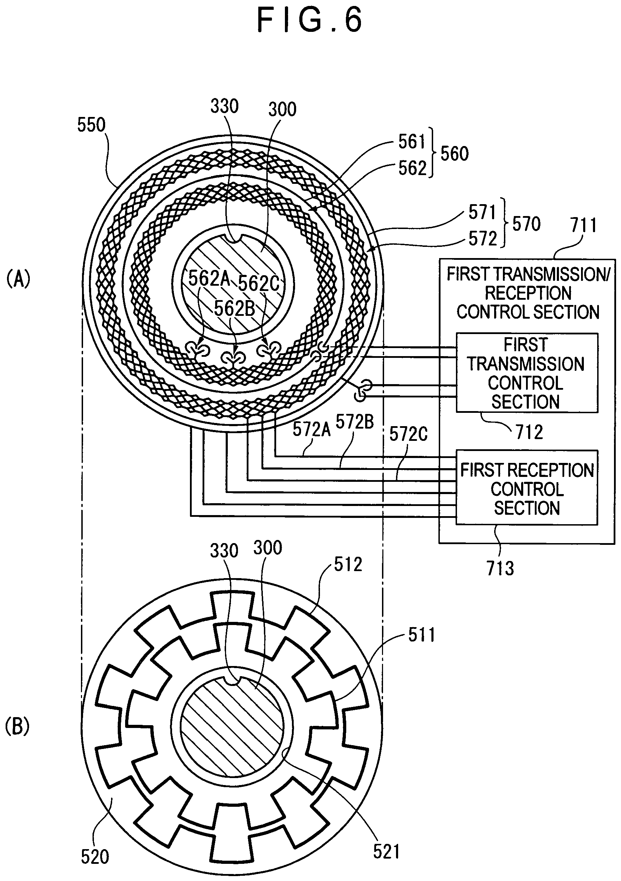

The rotary encoder 500 is a so-called one-revolution ABS (absolution detection) rotary encoder 500. FIGS. 6A and 6B are diagrams showing the facing surfaces of the stator 550 and the rotor 510, respectively. FIG. 6A shows one surface of the stator 550, and FIG. 6B is one surface of the rotor 510.

A surface of the stator 550 opposite to the rotor 510 is equipped with an electrode section having a double structure of an inner side and an outer side. That is, an inner stator electrode section 560 is disposed on the inner side, and an outer stator electrode section 570 is disposed outside of the inner stator electrode section 560 (refer to FIG. 6A). The stator electrode sections 560 and 570 are connected to the first transmission/reception control section 711. A surface of the rotor 510 opposite to the stator 550 is equipped with an electrode section having a double structure of an inner side and an outer side. That is, an inner coupling electrode section 511 that is electromagnetically coupled with the inner stator electrode section 560 is disposed on the inner side, and an outer coupling electrode section 512 that is electromagnetically coupled with the outer stator electrode section 570 is disposed on the outer side (refer to FIG. 6B).

First, a description will be given of the inner stator electrode section 560 and the outer stator electrode section 570 with reference to FIG. 6A.

The inner stator electrode section 560 includes an inner transmission electrode section 561 formed of one electrode wire that is arranged in the form of a ring, and an inner reception electrode section 562 that is formed of three electrode wires 562A to 562C that form rhomboidal coils continuous at given pitches inside of the inner transmission electrode section 561, respectively, and is disposed in the form of a ring as a whole.

Likewise, the outer stator electrode section 570 includes an outer transmission electrode section 571 formed of one electrode wire that is arranged in the form of a ring, and an outer reception electrode section 572 that is formed of three electrode wires 572A to 572C that form rhomboidal coils continuous at given pitches inside of the outer transmission electrode section 571, respectively, and is disposed in the form of a ring as a whole.

Each of the electrode wires (562A to 562C) that constitute the inner reception electrode section 562 is formed of nine (nine periods) rhombuses, and each of the electrode wires (572A to 572C) that constitute the outer reception electrode section 572 is formed of ten (ten period) rhombuses. In the respective reception electrode sections 562 and 572, the respective three electrode wires 562A to 562C and 572A to 572C are so superimposed as to be out of phase.

In this example, in FIG. 6A, portions where it appears that the wires cross each other are apart in a direction orthogonal to the paper surface to ensure insulation.

The inner reception electrode section 562 and the outer reception electrode section 572 are equivalently configured so that the ring coils that are originally independent from each other are connected to each other by one electrode wire, that is, the respective rhombuses equivalently function as one coil.

In this example, the respective electrode wires of the transmission electrode sections 561 and 571 are connected to the first transmission control section 712, and a given AC signal is applied to the respective electrode wires from the first transmission control section 712.

The respective electrode wires 562A, 562B, and 572A to 572C of the reception electrode sections 562 and 572 are connected to the first reception control section 713, and the signals of the reception electrode sections 562 and 572 are sampled in a given sampling period by the first reception control section 713.

Subsequently, a description will be given of the inner coupling electrode section 511 and the outer coupling electrode section 512 with reference to FIG. 6B.

The inner coupling electrode section 511 is constructed by an electrode wire that draws rectangular waves and is arranged in the form of a ring as a whole. Likewise, the outer coupling electrode section 512 is constructed by an electrode wire that draws rectangular waves and is arranged in the form of a ring as a whole.

The inner coupling electrode section 511 is rectangular waves of nine periods, and the outer coupling electrode section 512 is rectangular waves of ten periods. The rectangular waves of the inner coupling electrode section 511 and the outer coupling electrode section 512 are equivalently configured so that the ring coils that are originally independent from each other are connected to each other by one electrode wire, that is, the respective rectangular waves equivalently function as one coil.

In the above-mentioned configuration, when a current (AC current) (i₁) is supplied to the inner transmission electrode section 561 and the outer transmission electrode section 571 from the first transmission control section 712, respectively, an induced magnetic field (B₁) occurs around the electrode wires of the transmission electrode sections 561 and 571. Then, the inner stator electrode section 560 and the inner coupling electrode section 511 are electromagnetically coupled with each other. The outer stator electrode section 570 and the outer coupling electrode section 512 are electromagnetically coupled with each other. Therefore, an induced current (i₂) occurs in the inner coupling electrode section 511 and the outer coupling electrode section 512, and an induced magnetic field (B₂, B₃) that is attributable to the induced current (i₂) also occurs therein.

In addition, the inner coupling electrode section 511 and the inner reception electrode section 562 are electromagnetically coupled with each other, and the outer coupling electrode section 512 and the outer reception electrode section 572 are electromagnetically coupled with each other. Therefore, an induced current (i₃) is generated in the electrode wires 562A to 562C, and 572A to 572C the inner reception electrode section 562 and the outer reception electrode section 572 by the aid of the magnetic field patterns of the inner coupling electrode section 511 and the outer coupling electrode section 512.

In this example, the inner coupling electrode section 511 and the inner reception electrode section 562 have nine periods whereas the outer coupling electrode section 512 and the outer reception electrode section 572 have ten periods. Therefore, the first detection phase due to the inner reception electrode section 562 changes ten periods, and the second detection phase due to the outer reception electrode section 572 changes nine periods with respect to one revolution of the rotor 510. Therefore, the first phase signal Φ1 due to the inner reception electrode section 562 and the second phase signal Φ2 due to the outer reception electrode section 572 are different from each other with respect to the rotation angle θ (0°≤θ<360°) of the rotor 510. During one revolution of the rotor 510, a phase difference ΔΦ between the first phase signal Φ1 and the second phase signal Φ2 is different with respect to the different rotation angle θ of the rotor 510. Therefore, conversely, the rotation phase θ of the rotor 510 within one revolution is unambiguously determined according to the phase difference ΔΦ between the first phase signal Φ1 and the second phase signal Φ2.

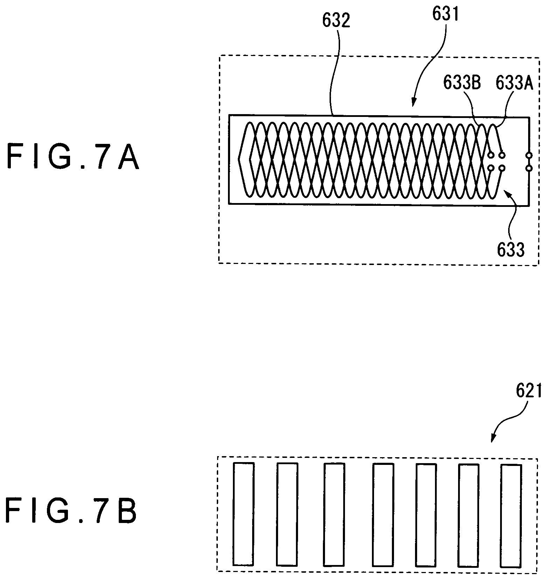

The detailed description of the principle of detecting the absolute position of the slider 620 in the linear encoder 600 of the phase signal transmission section 400 will be omitted. However, for example, the movement of the slider 620 can be detected by coupling of the electrode shown in FIGS. 7A and 7B.

A detection electrode section 631 shown in FIG. 7A has similar configuration to the stator electrode sections 560 and 570, and includes a transmission electrode section 632 and a reception electrode section 633 that has two electrode wires 633A, 633B. Also, a coupling electrode section 621 shown in FIG. 7B is basically identical in the configuration with the coupling electrode sections 511 and 512 of the rotor 510. Then, a detection electrode section 631 is disposed in the detection scale 630, and a coupling electrode section 621 is disposed in the slider 620. In this situation, two detection electrode sections 631 that are different in period from each other are disposed in the detection scale 630, and likewise two coupling electrode sections 621 that are different in period from each other are disposed in the slider 620. In this way, the detection scale 630 and the slider 620 face each other in a state where the respective electrode sections 631 and 621 are disposed in the detection scale 630 and the slider 620. As a result, the signal that is obtained from the detection electrode section 631 changes according to the position of the slider 620, and the absolute position of the slider 620 is unambiguously obtained.

The operation of the first embodiment configured as described above will be described.

When the spindle 300 rotates by the aid of the knob 320, the internal thread 211 of the main body 200 and the feed screw 310 of the spindle 300 are screwed with each other to move the spindle 300 forward and backward in the axial direction. When the spindle 300 rotates, the rotary cylinder 530 rotates together with the spindle 300 by the key 540 that is engaged with the key groove 330 of the spindle 300.

When the rotary cylinder 530 rotates, the rotor plate 520 rotates together with the rotary cylinder 530. The rotation of the rotor plate 520 is detected by the stator 550 and then transmitted to the first reception control section 713. Subsequently, the rotation angle of the rotor plate 520 within one revolution is calculated in the rotation angle calculating section 722. In this example, since the rotor plate 520 rotates integrally with the spindle 300, the rotation angle of the rotor plate 520 within one revolution is a rotation angle of the spindle 300 within one revolution.

Also, when the rotary cylinder 530 rotates, the nut member 610 that is screwed with the rotary cylinder 530 slides. In this situation, the slider 620 slides together with the nut member 610. The absolute position of the slider 620 is detected by the detection scale 630 and then transmitted to the second reception control section 716. Subsequently, the rotation speed of the spindle 300 is calculated by the spindle rotation speed calculating section 725 on the basis of the position of the slider 620.

The total rotation phase of the spindle 300 is calculated by the total rotation phase calculating section 726 on the basis of the rotation angle (= the rotation angle of the spindle 300 per one revolution) of the rotor plate 520 which is calculated by the rotation angle calculating section 722 and the spindle rotation speed that is calculated by the spindle rotation speed calculating section 725. The absolute position of the spindle 300 is calculated by the spindle position calculation section 727 on the basis of the calculated total rotation phase and the feed pitch (2mm) of the spindle 300. The calculated spindle absolute position is displayed by the display section 730.

The above-mentioned configuration according to the first embodiment is capable of obtaining the following effects.
(1) The rough information such as the spindle rotation speed is acquired on the basis of the absolute position of the slider 620, and the high-precision rotation phase within one revolution can be acquired on the basis of the rotation angle of the rotor plate 520.
   Then, the spindle absolution position can be obtained with high precision by those two information items.
(2) Since only the rotor plate 520 of the rotary encoder 500 rotates together with the spindle 300, the number of key grooves 330 that are carved on the spindle 300 may be one.
   Accordingly, the machining for carving the key groove 330 in the spindle 300 is simple, thereby making it possible to reduce the manufacture costs.
   Also, since the number of key grooves 330 that are carved in the spindle 300 may be one, the region where the key groove 330 is carved is shortened, thereby making it possible to downsize the micrometer head 100.
(3) The nut member 610 that stops the rotation is screwed with the external thread 531 of the rotary cylinder 530, to thereby slide the slider 620 together with the nut member 610. As a result, the external thread 531 of the rotary cylinder 530 and the internal thread 611 of the nut member 610 can be machined with high precision, thereby making it possible to enhance the precision with which the rotation of the spindle 300 is converted into the amount of slide of the slider 620.
   Accordingly, the detection precision of the spindle position can be improved.
(4) Since the linear encoder 600 absolutely detects the position of the slider 620, the rotation speed of the spindle can be obtained with high accuracy based on the absolute position of the slider 600 absolutely detected by the linear encoder 600. Thus, the absolute position of the spindle can be obtained with high accuracy.
(5) Since the cylinder that supports the rotation of the rotor plate 520 and the rotary cylinder 530 that is screwed with the nut member 610 are made common, it is possible to reduce the number of parts and downsize the micrometer head 100.
(6) Since the external thread 531 of the rotary cylinder 530 is thinner in the pitch than the feed screw 310 of the spindle 300, the movable range of the nut member 610 and the slider 620 is narrower than the movable range of the spindle 300.

Accordingly, the linear encoder 600 can be downsized, with the result that the overall device can be downsized.

The present invention is not limited to the above embodiment, and any modifications or improvements within a range in which the object of the present invention can be achieved are included in the present invention.

The rotary cylinder supports the rotor plate and provides the internal thread that is screwed with the nut member, and the rotary encoder and the linear encoder commonly use one rotary cylinder. However, it is needless to say that the rotary cylinder that supports the rotor plate and the rotary cylinder that is engaged with the nut member can be separated from each other.

The absolute position measuring device needs to provide only the spindle that is moved forward and backward by rotation, and is not limited to the micrometer head.

It should be noted that the present invention is not limited to the arrangement in which the position of the slider 620 is absolutely detected, but includes other arrangements as long as the linear encoder 600 can detect the position of the slider 620. For example, the linear encoder 600 can incrementally detect the position of the slider 620. In this case, the linear encoder 600 also can obtain the rotation speed of the spindle based on the movement of the slider 620 detected by the linear encoder 600. Also, since the encoder performing incremental detection has simpler structure than the encoder performing absolute detection, the manufacturing process for the micrometer head 1 can be simplified, therefore improving manufacturing efficiency.

## Claims

1. An absolute position measuring device, **characterized by** comprising:
a main body (200);
a spindle (300) that is screwed with the main body (200) and movable forward and backward in an axial direction by rotation;
a phase signal transmission section (400) for transmitting two phase signals that are different in period from each other according to the rotation of the spindle (300); and
an arithmetic processor (720) for performing an arithmetic operation on the two phase signals to obtain an absolute position of the spindle (300), **characterized in that**:
a key groove (330) is formed in the spindle (300) along an axial line;
the phase signal transmission section comprises:
a rotary encoder (500) which includes a key (540) engaged with the key groove (330) and a rotor plate (520) which rotates integrally with the spindle (300) in a state where the rotor plate (520) is fitted around the spindle (300);
a rotary cylinder (530) which includes the key (540) engaged with the key groove (330), rotates integrally with the spindle (300) in a state where the rotary cylinder (530) is fitted around the spindle (300), and includes an external thread (531) on an outer surface;
a nut member (610) which is engaged with the external thread (531) of the rotary cylinder (530) in a rotation stop state, and slides with the rotation of the rotary cylinder (530); and
a linear encoder (600) having a slider (620) which slides together with the nut member (610) and a detector (630) for detecting a position of the slider (620);
the rotary encoder (500) absolutely detects a rotation angle of the rotor plate (520) within one revolution and outputs a first one of the two phase signals that are different in period from each other;
the linear encoder (600) absolutely detects the position of the slider (620) and outputs a second one of the two phase signals that are different in period from each other; and
the arithmetic processor (720) calculates the position of the slider (620) on the basis of the second one of the two phase signals, calculates a rotation phase of the spindle (300) within one revolution on the basis of the first one of the two phase signals, and calculates the absolute position of the spindle (300) on the basis of the calculated position of the slider (620) and rotation phase of the spindle (300) within one revolution.

2. The absolute position measuring device according to claim 1, **characterized in that** the rotor plate (520) is supported by the rotary cylinder (530).

3. The absolute position measuring device according to claim 1 or 2, **characterized in that** the external thread (531) of the rotary cylinder (530) is thinner in the pitches than the screw (310) of the spindle (300).

## Patentansprüche

1. Vorrichtung zum Messen der Absolutposition, **dadurch gekennzeichnet dass** sie umfasst:
einen Hauptkörper (200);
eine Spindel (300), die mit dem Hauptkörper (200) verschraubt ist, und die durch Rotation in einer Axialrichtung vorwärts und rückwärts beweglich ist;
einen Phasensignalübertragungsabschnitt (400) zum Übertragen zweier Phasensignale, deren Periode sich voneinander unterscheidet entsprechend der Rotation der Spindel (300); und
einen Arithmetikprozessor (720), um eine arithmetische Berechnung an den zwei Phasensignalen durchzuführen, um eine Absolutposition der Spindel (300) zu erhalten, **dadurch gekennzeichnet, dass**:
eine Schlüsselnut (330) in der Spindel (300) entlang einer Axiallinie ausgebildet ist;
der Phasensignalübertragungsabschnitt umfasst:
einen Drehwertgeber (500), der einen Schlüssel (540) einschließt, der in die Schlüsselnut (330) eingreift, und eine Drehplatte (520), die integral mit der Spindel (300) in einem Zustand rotiert, wo die Drehplatte (520) um die Spindel (300) eingepasst ist;
einen Drehzylinder (530), der den Schlüssel (540), der in die Schlüsselnut (330) eingreift, einschließt, der integral mit der Spindel (300) in einem Zustand rotiert, wo der Drehzylinder (530) um die Spindel (300) eingepasst ist, und der ein Außengewinde (531) auf einer äußeren Oberfläche einschließt;
ein Schraubenmutterelement (610), das auf dem Außengewinde (531) des Drehzylinders (530) in einem Rotationsstoppzustand sitzt; und
einen Linearkodierer (600) mit einem Gleiter (620), der zusammen mit dem Schraubenmutterelement (610) und einem Detektor (630) zum Erfassen einer Position des Gleiters (620) gleitet;
wobei der Drehgeber (500) einen Rotationswinkel der Drehplatte (520) innerhalb einer Umdrehung absolut erfasst und ein erstes von den zwei Phasensignalen, die eine voneinander unterschiedliche Periode aufweisen, ausgibt;
wobei der Linearkodierer (600) die Position des Gleiters (620) absolut erfasst und ein zweites der zwei Phasensignale, die eine voneinander unterschiedliche Periode aufweisen, ausgibt; und
wobei der Arithmetikprozessor (720) die Position des Gleiters (620) auf der Basis des zweiten der zwei Phasensignale berechnet,
eine Rotationsphase der Spindel (300) innerhalb einer Umdrehung auf der Basis des ersten der zwei Phasensignale berechnet,
und die Absolutposition der Spindel (300) auf der Basis der berechneten Position des Gleiters (620) und der Drehphase der Spindel (300) innerhalb einer Umdrehung berechnet.

2. Vorrichtung zur Messung der Absolutposition nach Anspruch 1, **dadurch gekennzeichnet, dass** die Drehplatte (520) durch den Drehzylinder (530) gelagert ist.

3. Vorrichtung zur Messung der Absolutposition nach Anspruch 1 oder 2, **dadurch gekennzeichnet, dass** das Außengewinde (531) des Drehzylinders (530) eine geringere Steigung aufweist als die Schraube (310) der Spindel (300).

## Revendications

1. Dispositif de mesure de position absolue, **caractérisé en ce qu'**il comprend :
un corps principal (200),
une tige (300) qui est vissée avec le corps principal (200) mais peut se déplacer par rotation vers l'avant et l'arrière dans la direction axiale,
une section de transmission de signaux de phase (400) destinée à transmettre deux signaux de phase qui sont de périodes différentes l'un par rapport à l'autre en fonction de la rotation de la tige (300), et
un processeur arithmétique (720) permettant d'effectuer une opération arithmétique sur les deux signaux de phase pour obtenir la position absolue de la tige (300), **caractérisé en ce que** :
une rainure principale (330) est formée dans la tige (300) le long d'une ligne axiale,
la section de transmission de signaux de phase comprend :
un codeur rotatif (500) qui inclut une clavette (540) en prise avec la rainure principale (330) et une plaque formant rotor (520) qui tourne dans le même mouvement que la tige (300) de sorte à ce que la plaque formant rotor (520) soit assujettie autour de la tige (300),
un cylindre rotatif (530), qui inclut la clavette (540) en prise avec la rainure principale (330), tourne dans le même mouvement que la tige (300), de sorte à ce que le cylindre rotatif (530) soit assujetti autour de la tige (300), et inclut un filet externe (531) sur sa surface externe,
un élément d'écrou (110) qui est en prise avec le filet externe (531) du cylindre rotatif (530) lorsque la rotation est arrêtée, et qui coulisse avec la rotation du cylindre rotatif (530), et
un codeur linéaire (600) comportant une glissière (620) qui coulisse en même temps que l'élément d'écrou (610), ainsi qu'un détecteur (630) destiné à détecter la position de la glissière (620),
le codeur rotatif (500) détecte de façon absolue l'angle de rotation de la plaque formant rotor (520) dans une seule révolution et délivre en sortie un premier des deux signaux de phase, de périodes différentes l'un par rapport à l'autre,
le codeur linéaire (600) détecte de façon absolue la position de la glissière (620) et délivre en sortie un second des deux signaux de phase, de périodes différentes l'un par rapport à l'autre, et
le processeur arithmétique (720) calcule la position de la glissière (620) sur la base du second des deux signaux de phase,
calcule la phase de rotation de la tige (300) dans une seule révolution sur la base du premier des deux signaux de phase,
et calcule la position absolue de la tige (300) sur la base de la position calculée de la glissière (620) et de la phase de rotation de la tige (300) dans une seule révolution.

2. Dispositif de mesure de position absolue selon la revendication 1, **caractérisé en ce que** la plaque formant rotor (520) est supportée par le cylindre rotatif (530).

3. Dispositif de mesure de position absolue selon la revendication 1 ou la revendication 2, **caractérisé en ce que** le filet externe (531) du cylindre rotatif (530) présente un pas plus mince que la vis (310) de la tige (300).
